**Europäisches Patentamt**

**European Patent Office**

**Office européen des brevets**

(19)

(11) Veröffentlichungsnummer : **0 057 294**
**B1**

(12) # EUROPÄISCHE PATENTSCHRIFT

(45) Veröffentlichungstag der Patentschrift :
**30.01.85**

(51) Int. Cl.⁴ : **H 02 K   5/16, H 02 K   5/24,**
**F 16 M   1/04, F 16 C 35/00**

(21) Anmeldenummer : **81201303.5**

(22) Anmeldetag : **24.11.81**

(54) **Lagertraganordnung für elektrische Maschinen.**

(30) Priorität : **29.01.81 CH 587/81**

(43) Veröffentlichungstag der Anmeldung :
**11.08.82 Patentblatt 82/32**

(45) Bekanntmachung des Hinweises auf die Patenterteilung : **30.01.85 Patentblatt 85/05**

(84) Benannte Vertragsstaaten :
**CH DE FR LI SE**

(56) Entgegenhaltungen :
**EP-A- 0 029 263**
**DE-A- 1 112 571**
**DE-A- 2 124 894**
**DE-C-   834 619**
**FR-A- 1 487 384**
**GB-A-   415 089**
**GB-A-   581 879**
**GB-A- 2 037 094**
**US-A- 1 626 760**
**US-A- 2 216 814**
**US-A- 2 695 202**
**US-A- 2 730 413**
**US-A- 3 064 152**

(73) Patentinhaber : **BBC Aktiengesellschaft Brown,**
**Boveri & Cie.**
**Haselstrasse**
**CH-5401 Baden (CH)**

(72) Erfinder : **Schluchter, Martin**
**Wyden 15**
**CH-5242 Birr (CH)**
Erfinder : **Voser, Max**
**Hauserstrasse 139**
**CH-5118 Scherz (CH)**

## Beschreibung

Die vorliegende Erfindung bezieht sich auf eine elektrische Maschine horizontaler Bauart mit einem Gehäuse und mit den Gehäusestirnseiten lösbar verbundener Lagertraganordnung mit integrierten Lagern, wobei die Lagertraganordnung doppelwandig und kastenartig mit zwischen den beiden Wänden angeordneten Verstärkungsrippen und mit einer von der Standfläche des Maschinengehäuses getrennten Standfläche ausgebildet ist, und wobei Abstützungen zur Aufnahme der Lager vorgesehen sind.

Eine derartige, zum Stand der Technik (gemäß Artikel 54 (3) EPÜ) zu zählende Lagerabstützung ist beispielsweise bereits in der EP-A-0 029 263 (Veröffentlicht 27-05-81 ; Priorität 20-11-79 CH-10331/79) vorgeschlagen worden. Diese ist für grosse Turbogeneratoren vorgesehen und damit entsprechend aufwendig.

Weiterhin wurde bereits eine Lagerabstützung bekannt, bei welcher der Stator einer elektrischen Maschine auf einem rahmenartigen, tragenden Gestell angeordnet ist, wobei dieses Gestell auf einem Grundrahmen befestigt ist. Die Lagerungen des Rotors sind in Querstreben des Gestelles angeordnet und können über besondere Einstellelemente eingestellt und fixiert werden. Die ganze rahmenartige Ausbildung des Gestelles wird mit abnehmbaren Verkleidungsplatten abgedeckt, wobei diese Platten gleichzeitig Gehäuseteile und Kühlluftführungen bilden (US-A-3,064,152).

Da bei dieser Ausbildung einer Lagerabstützung das den Stator aufnehmende Gestell und die die Lager haltenden Gehäuseteile auf einem gemeinsamen Grundrahmen montiert sind, werden alle vom Rotor verursachten Unwuchtkräfte über die Statorgehäuseteile in das Fundament weitergeleitet. Eine derartige Lageranordnung ergibt als weiteren Nachteil grössere Anisotropie der Rotorlagerung, d. h. unterschiedliche Lagerabstützungs-Elastizität in horizontaler und vertikaler Richtung, das zu einer tieferen biegekritischen Drehzahl und zu einem vergrösserten Drehzahlbereich, in welchem Resonanzschwingungen auftreten können, führt.

Bei einer Anordnung gemäß der eingangs genannten EP-A-0029.263 werden dem gegenüber die Unwuchtkräfte direkt in das Fundament eingeleitet, weil die Lagertraganordnung und das Maschinengehäuse je eine Standfläche aufweisen und nicht auf einem gemeinsamen Grundrahmen befestigt sind.

Aus der DE-A-2 124 894 ist eine Lagerhalterung von elektrischen Maschinen mit waagrechter Welle bekanntgeworden, bei welcher ein Baustein oberhalb der Maschinengrundfläche, jedoch unterhalb der Wellenachse mit Füssen auf tragenden Standflächen befestigt ist. Dabei sind jedoch die Füsse konsolenartig ausgebildet und in einer ersten Ausbildungsform mit dem Lagerschild fest verbunden und in einer zweiten Ausbildung sind die Standflächen durch Sockel gebildet, die keine direkte Verbindung zum Maschinengehäuse aufweisen, sondern separat am Maschinenfundament befestigt.

Es ist daher Aufgabe der vorliegenden Erfindung, eine Lagertraganordnung zu schaffen, bei welcher erreicht wird, dass die Lagertraganordnung bei im Stator eingefahrenem Rotor genau positioniert und mit dem Maschinengehäuse verschraubt werden kann.

Die vorgenannte Aufgabe wird erfindungsgemäss dadurch gelöst, dass zur Vereinfachung der Demontage der Maschine die Lagertraganordnung in einzelne Tragkörperteile unterteilt ist und etwa bis zur Achsmittelebene der Lager reicht und die obere Hälfte der Gehäusestirnseiten durch bis an die Oberseite der Lagertraganordnung reichende Abdeckungen verschlossen ist.

Ein weiterer Vorteil des Erfindungsgegenstandes besteht darin, dass durch die lösbare Befestigung der Lagertraganordnung am Maschinenkörper nur ein geringer Platzbedarf erforderlich ist.

Die erfindungsgemässe Weiterbildung gemäss Anspruch 2 ergibt den Vorteil, dass die Demontage der elektrischen Maschine wesentlich vereinfacht wird, und zwar durch axiales und seitliches Herausziehen des unteren Tragkörpers und Absenken des oberen Tragkörpers.

Weitere vorteilhafte Ausbildungen gemäss den Ansprüchen 3 und 4, wonach der untere, bzw. der obere Tragkörper in der Vertikalebene unterteilt ist, werden sich überall dort als vorteilhaft erweisen, wo am Aufstellungsort der Maschine in Axialrichtung, oder beidseitig der Maschine beengte Platzverhältnisse vorherrschen. So können bei diesen Ausbildungsformen jeweils nach Lösen der Lagertraganordnung vom Maschinengehäuse entweder die beiden Tragkörperteile des unteren oder des oberen Tragkörpers seitlich abgezogen werden, wodurch die Rotorwelle frei wird und der Rotor aus dem Maschinengehäuse herausgezogen werden kann. Analog dazu kann auch die Montage erfolgen, wobei durch die Unterteilung der Tragkörper aufwendige Hilfsabstützungen nicht mehr erforderlich werden, da die Montage in einer Art Baukastensystem erfolgen kann.

Durch die erfindungsgemässe Anordnung von Montageöffnungen in den Tragkörpern (Anspruch 5) wird die Montage der Maschine weiter vereinfacht und es werden keinerlei Spezialwerkzeuge erforderlich.

Wie aus Anspruch 6 hervorgeht, kann unterhalb der Lager ein Oelsumpf vorgesehen werden. Dadurch werden aufwendige und kompliziert zu verlegende Schmierölleitungen, insbesondere bei Schmiermittel-Eigenkühlung zu den Lagern vermieden.

Durch die Anordnung gemäss Anspruch 7, wonach die horizontale Trennebene beider Lagerkörper in Höhe der Rotorunterkante liegt, ergibt sich der Vorteil, dass beispielsweise bei einer erforderlich werdenden Revision der Maschine die oberen Tragkörper vom Maschinengehäuse und der obere Tragkörper vom unteren Tragkörper gelöst zu werden brauchen, wonach der Rotor, zusammen mit dem Lager und dem oberen Tragkörpe einer Seite der Maschine aus dem Stator herausgezogen werden kann, während der untere Tragkörper mit dem Fundament verschraubt bleiben kann. Auf der anderen Maschinenseite braucht lediglich das Lager demontiert zu werden.

Eine bevorzugte Möglichkeit der Demontage besteht darin, auf einer Maschinenseite den unteren Tragkörper vom Gehäuse und vom oberen Tragkörper zu lösen und den unteren Tragkörper seitlich oder axial wegzuziehen. Nach der Demontage beider Lager wird der obere Tragkörper abgesenkt. Der Rotor kann nun aus dem Maschinengehäuse herausgezogen werden, wobei aufgrund der Lage der horizontalen Trennebene zwischen unterem und oberem Tragkörper der abgesenkte Tragkörper den Rotor nicht behindert.

In der Zeichnung sind Ausführungsbeispiele des Erfindungsgegenstandes vereinfacht dargestellt und es sind gleiche Teile in den einzelnen Figuren mit denselben Bezugszeichen versehen.

Es zeigt :

Figur 1 eine perspektivische Darstellung einer erfindungsgemässen Lagertraganordnung,

Figur 2 eine in der Horizontalebene geteilte Lagertraganordnung,

Figur 3 eine Lagertraganordnung gem. Fig. 2 mit in der Vertikalebene unterteiltem unteren Tragkörper,

Figur 4 eine Lagertraganordnung gem. Fig. 2 mit in der Vertikalebene unterteiltem oberen Tragkörper.

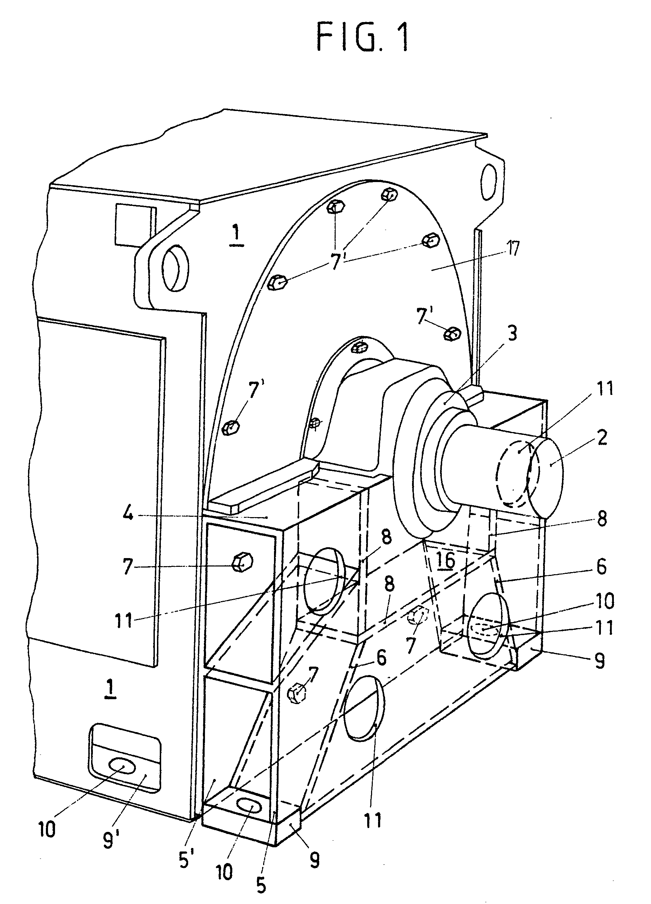

Gemäss Fig. 1 ist mit 1 ein Statorgehäuse einer elektrischen Maschine bezeichnet, deren Rotorwelle 2 in Lagern 3 gelagert ist. Das Lager 3 ist an einer Lagertraganordung 4 angeordnet, welche doppelwandig und kastenartig ausgebildet und mit zwischen den beiden, den Kasten bildenden Wänden 5, 5' angeordneten Verstärkungen 6 versehen ist. Die Lagertraganordnungen 4 sind mittels Schrauben 7 an den Stirnseiten des Statorgehäuses 1 befestigt und so ausgebildet, das sie bis etwa zur Achsmittelebene der Rotorwelle 2 reichen. Die obere Hälfte der Gehäusestirnseiten ist durch eine bis an die Oberseite der Lagertraganordnung 4 reichende Abdeckung 17 verschlossen, wobei die Abdeckung 17 mittels Schrauben 7' am Statorgehäuse 1 verschraubt ist. Für das Lager 3 sind in der Lagertraganordnung 4 Abstützungen 8 vorgesehen, welche mit den Verstärkungen 6 verbunden sind, wobei die Verstärkungen 6, zusammen mit den Abstützungen 8 so ausgebildet sind, dass ein Oelsumpf 16 für die Schmiermittelversorgung des Lagers 3 gebildet wird. An der Unterseite der Lagertraganordnung 4 sind Fussleisten 9 angeordnet, welche mit den Fussleisten 9' des Statorgehäuses 1 in derselben Ebene liegen, wodurch eine besondere Grundplatte für die Maschine nicht erforderlich wird. In den Fussleisten 9, 9' sind Schraubenlöcher 10 zur Befestigung der Maschine am Fundament vorgesehen. Die Frontplatte der Lagertraganordnung 4 ist mit Montageöffnungen 11 versehen, um mittels geeigneten Werkzeugen die Lagertraganordnung 4 mit dem Statorgehäuse 1 zu verschrauben.

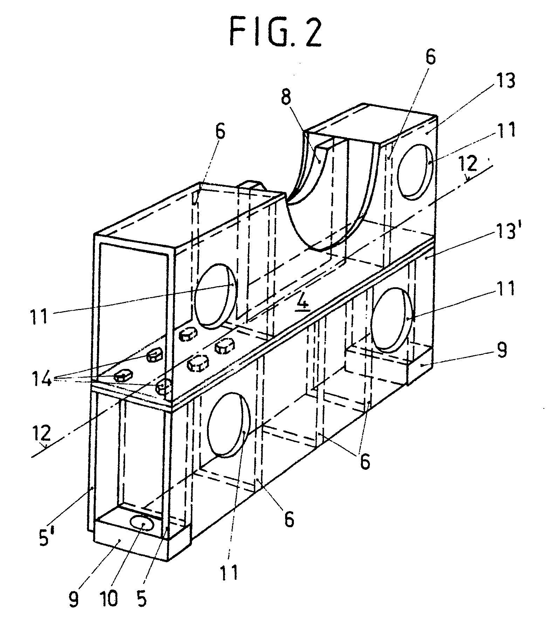

In der in der Fig. 2 gezeigten Ausbildungsform ist die Lagertraganordnung 4 entlang einer Horizontalebene 12 in zwei Tragkörper 13, 13' unterteilt, welche mittels Verschraubungen 14 miteinander verbunden werden. Bei dieser Ausbildung kann nach Lösen der Verschraubungen 14 und der (hier nicht gezeigten) Schrauben am Statorgehäuse 1, sowie der Fundamentbefestigungen der untere Tragkörper 13' entweder seitlich oder in Axialrichtung nach vorn herausgezogen werden, wonach der obere Tragkörper 13 nach der Demontage der Lager 3 abgesenkt wird und der Rotor aus dem Statorgehäuse 1 herausgezogen werden kann.

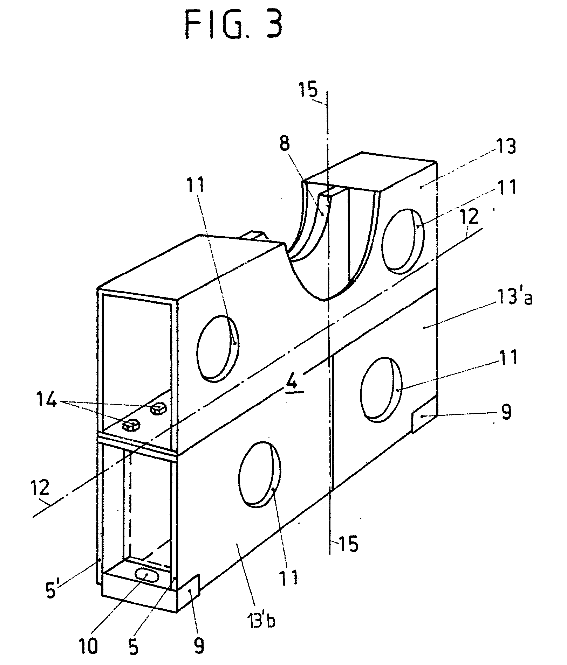

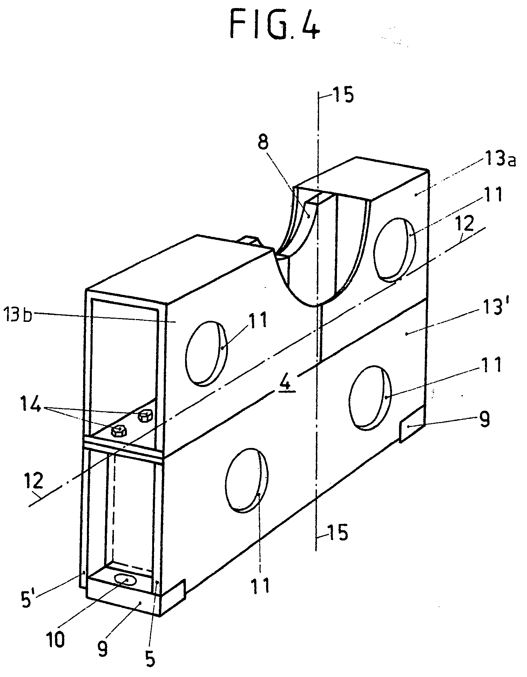

Weitere mögliche Ausbildungen der erfindungsgemässen Lagertraganordnung 4 sind aus den Fig. 3 und 4 ersichtlich, welche sich bei besonders beengten Platzverhältnissen am Aufstellungsort der Maschine anbieten werden.

So ist gemäss der Fig. 3 der unter Tragkörper 13' und gemäss der Fig. 4 der obere Tragkörper 13 der in der Horizontalebene 12 unterteilten Lagertraganordnung 4 nochmals in der Vertikalebene 15 geteilt. Die durch die Teilung in der Vertikalebene 15 aus den Tragkörpern 13, 13' gebildeten Tragkörperteile 13a, 13b ; 13'a, 13'b werden ebenfalls über (nicht dargestellte) Schraubenverbindungen miteinander verschraubt, und zwar derart, dass diese Verbindungen durch die Montageöffnungen 11 leicht erreichbar sind. Derartige weitere Unterteilungen der in der Horizontalebene 12 unterteilten Lagertraganordnung 4 schaffen eine bedeutende Erleichterung in der Montage und Demontage der elektrischen Maschine, insbesondere bei erforderlichen Lagerrevisionen oder beim Austausch derselben.

**Ansprüche**

1. Elektrische Maschine horizontaler Bauart mit einem Gehäuse (1) und mit den Gehäusestirnseiten lösbar verbundener Lagertraganordnung (4) mit integrierten Lagern (4), wobei die Lagertraganordnung (4) doppelwandig und kastenartig mit zwischen den beiden Wänden (5, 5') angeordneten Verstärkungsrippen (6) und mit einer von der Standfläche des Maschinengehäuses getrennten Standfläche ausgebildet ist, und wobei Abstützungen (8) zur Aufnahme der Lager (3) vorgesehen sind, dadurch gekennzeichnet, dass zur Vereinfachung der Demontage der Maschine die Lagertraganordnung (4) in einzelne Tragkörperteile unterteilt ist und etwa bis zur Achsmittelebene der Lager (3) reicht und die obere Hälfte der Gehäusestirnseiten durch bis an

5      **0 057 294**      6

die Oberseite der Lagertraganordnung (4) reichende Abdeckungen (17) verschlossen ist.

2. Elektrische Maschine nach Anspruch 1, dadurch gekennzeichnet, dass mindestens auf einer Maschinenseite die Lagertraganordnung (4) horizontal in einen unteren (13') und einen oberen Tragkörper (13) unterteilt ist.

3. Elektrische Maschine nach Anspruch 2, dadurch gekennzeichnet, dass der untere Tragkörper (13') vertikal in zwei untere Tragkörperteile (13'a, 13'b) unterteilt ist.

4. Elektrische Maschine nach Anspruch 2 oder 3, dadurch gekennzeichnet, dass der obere Tragkörper (13) vertikal in zwei obere Tragkörperteile (13a, 13b) unterteilt ist.

5. Elektrische Maschine nach Anspruch 1, dadurch gekennzeichnet, dass in den Tragkörpern (13, 13'; 13a, 13b; 13'a, 13'b) Montageöffnungen (11) vorgesehen sind.

6. Elektrische Maschine nach den Ansprüchen 1 und 2, dadurch gekennzeichnet, dass unterhalb der Lager (3) ein Oelsumpf (16) vorgesehen ist.

7. Elektrische Maschine nach Anspruch 2, dadurch gekennzeichnet, dass die horizontale Trennebene (12) beider Tragkörper (13, 13') in Höhe der Rotorunterkante oder darüber liegt.

## Claims

1. Electric machine of horizontal construction with a housing (1) and bearing support device (4) which is detachably connected to the housing faces and which has integrated bearings (4), the bearing support device (4) being constructed box-like and double-walled with reinforcing ribs (6) being arranged between the two walls (5, 5') and having a base which is separate from the base of the machine housing, and supports (8) being provided for accommodating the bearings (3), characterised in that, for the purpose of simplifying dismantling of the machine, the bearing support device (4) is subdivided into individual support member parts and reaches approximately to the centre plane of the axis of the bearings (3) and the upper half of the housing faces is closed by covers (17) reaching up to the top of the bearing support device (4).

2. Electric machine according to Claim 1, characterised in that, at least on the one machine side, the bearing support device (4) is horizontally subdivided into a lower support member (13') and into an upper support member (13).

3. Electric machine according to Claim 2, characterised in that the lower support member (13') is vertically subdivided into two lower support member parts (13'a, 13'b).

4. Electric machine according to Claim 2 or 3, characterised in that the upper support member (13) is vertically subdivided into two upper support member parts (13a, 13b).

5. Electric machine according to Claim 1, characterised in that assembly openings (11) are provided in the support members (13, 13' : 13a, 13b ; 13'a, 13'b).

6. Electric machine according to Claims 1 and 2, characterised in that an oil sump (16) is provided underneath the bearings (3).

7. Electric machine according to Claim 2, characterised in that the horizontal plane (12) separating the two support members (13, 13') is at the level of the lower edge of the rotor or above.

## Revendications

1. Machine électrique de type horizontal comportant une enveloppe (1) et un dispositif de support de palier (4) à paliers intégrés relié de manière détachable aux côtés d'about de l'enveloppe, le dispositif de support de palier (4) ayant la forme d'une structure à double paroi et en caisson à éléments de renforts (6) disposés entre les deux parois (5, 5') et à embase séparée de l'embase de l'enveloppe de la machine, et des supports (8) destinés à recevoir le palier (3) étant prévus, caractérisée en ce que, pour simplifier le démontage de la machine, le dispositif de support de palier (4) est subdivisé en des parties de corps de support individuelles et s'étend environ jusqu'au plan de l'axe central du palier (3) et la moitié supérieure des côtés d'about de l'enveloppe est fermée par des plaques (17) qui vont jusqu'au côté supérieur du dispositif de support de palier (4).

2. Machine électrique suivant la revendication 1, caractérisée en ce que d'un côté de la machine au moins, le dispositif de support de palier (4) est divisé horizontalement en un corps de support inférieur (13') et un corps de support supérieur (13).

3. Machine électrique suivant la revendication 2, caractérisée en ce que le corps de support inférieur (13') est divisé verticalement en deux parties de corps de support inférieur (13'a, 13'b).

4. Machine électrique suivant la revendication 2 ou 3, caractérisée en ce que le corps de support supérieur (13) est divisé verticalement en deux parties de corps de support supérieur (13a, 13b).

5. Machine électrique suivant la revendication 1, caractérisée en ce que des ouvertures de montage (11) sont prévues dans les corps de support (13, 13' ; 13'a, 13'b).

6. Machine électrique suivant les revendications 1 et 2, caractérisée en ce qu'un carter d'huile (16) est prévu en dessous du palier (3).

7. Machine électrique suivant la revendication 2, caractérisée en ce que le plan de séparation horizontal (12) des deux corps de support (13, 13') est disposé au niveau du bord inférieur du rotor ou au-dessus de celui-ci.

4

# FIG. 1

# FIG. 2

# FIG. 3

# FIG. 4